# EUROPEAN PATENT SPECIFICATION

(11) **EP 1 134 486 B1**
(45) Date of publication and mention of the grant of the patent: **08.09.2004**
(21) Application number: 01106837.6
(22) Date of filing: 19.03.2001
(51) Int. Cl.: F21S 11/00, F24J 2/08, F24J 2/06, F24J 2/54

(54) **Collector assembly for collecting and conveying sunlight**
Kollektoranordnung zum Sammeln und Transport von Sonnenlicht
Ensemble collecteur pour le captage et le transport de la lumière solaire

(30) Priority: 17.03.2000 IT TO000258
(43) Date of publication of application: 19.09.2001
(73) Proprietor: ILTI LUCE S.r.l., 10154 Torino (IT)
(72) Inventor: Albano, Carlo, 10076 Nole (IT)
(74) Representative: Bongiovanni, Simone

(56) References cited:
- EP-A- 0 922 914
- US-A- 4 409 963
- US-A- 4 846 554
- US-A- 4 977 744

## Description

The present invention relates to a collector assembly for collecting and conveying sunlight.

Collector assemblies for collecting and conveying sunlight are known from US 4,409,963 and comprise a number of Fresnel lenses positioned to direct the incoming sunlight to the input of a optical light-transmission device for conveying the incoming light rays to one or more regions for illumination.

Known collector assemblies of the type described above have the major drawback of being extremely complex in terms of design and component parts, which, being difficult to produce, assemble and install, result in high cost and restricted use. Simpler, cheaper collector assemblies, on the other hand, have a poor degree of efficiency and reliability by part of the incident light rays on the lenses being lost along the way to the region/s for illumination.

It is an object of the present invention to provide an improved collector assembly for collecting and conveying sunlight, and which, as compared with known collector assemblies, is extremely straightforward, is cheap to produce and, at the same time, provides for a high degree of efficiency and reliability.

According to the present invention, there is provided a collector assembly for collecting and conveying sunlight, as claimed in Claim 1.

A non-limiting embodiment of the invention will be described by way of example with reference to the accompanying drawings, in which:
Figure 1 shows a side view of a preferred embodiment of a collector assembly in accordance with the present invention;
Figure 2 shows a larger-scale section, with parts removed for clarity, along line II-II in Figure 1;
Figure 3 shows a much larger-scale section along line III-III in Figure 2;
Figure 4 shows an exploded view of the Figure 3 detail;
Figure 5 shows a larger-scale section along line V-V in Figure 2.

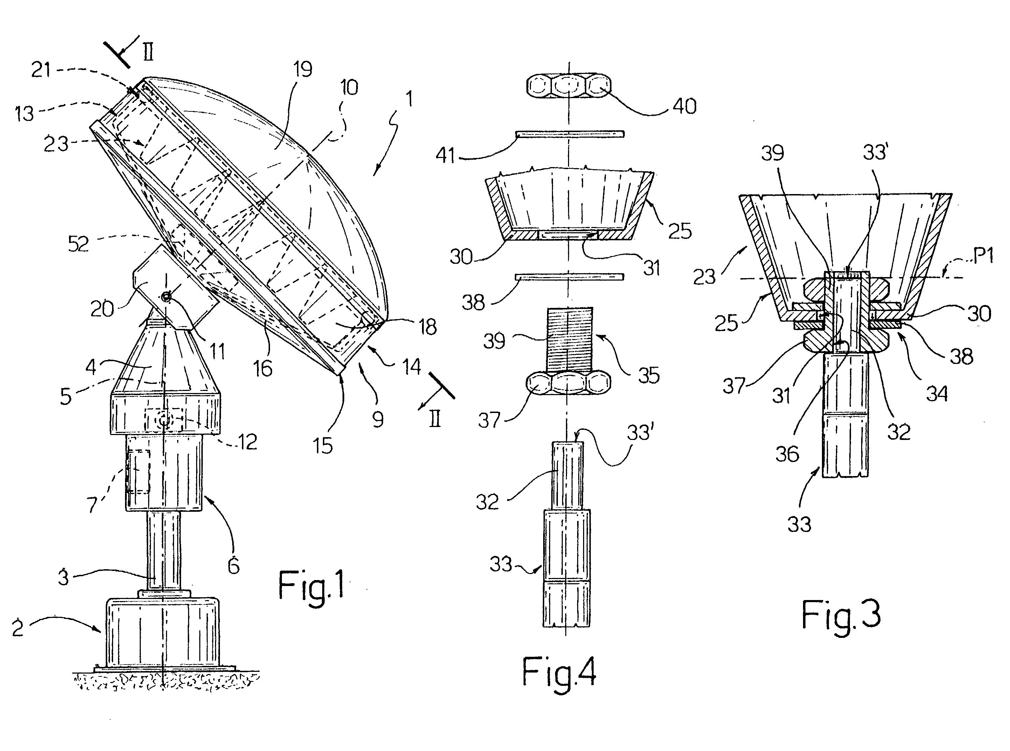

Number 1 in Figure 1 indicates a collector assembly for collecting and conveying sunlight.

Assembly 1 comprises a base 2; an upright 3 connected integrally to base 2; and a head 4 fitted to the top end of upright 3 and rotated, with respect to upright 3, about a vertical axis 5 by a known actuating device 6 (not described in detail) comprising an electric drive motor 7.

With reference to Figure 1, to head 4 is hinged a circular sunlight collector 9, which has an axis 10, is fitted to head 4 by a pin 11 perpendicular to axes 5 and 10, and is rotated about the axis of pin 11 by a known mechanical transmission (not shown) activated by a respective electric motor 12.

More specifically, collector 9 comprises a frame 13 (Figures 1 and 2) housed partly in an outer casing 14 comprising a rear cup-shaped body 15, in turn comprising a conical bottom wall 16 tapering towards and fitted to head 4, and a cylindrical lateral wall 18 connected to bottom wall 16. Casing 14 also comprises a front dome-shaped body 19 made of material permeable to light, preferably a polycarbonate, and fitted in fluidtight manner to the lateral wall.

With reference to Figure 1, frame 13 comprises a fork-shaped rear connecting portion 20 projecting outwards through wall 16 and hinged to head 4 by pin 11; and a flat, circular, grid portion 21, which is housed inside casing 14, close to where bodies 15 and 19 are joined, extends perpendicularly to axis 10 at an axial distance from bottom wall 16, and is connected integrally to fork-shaped portion 20.

Grid portion 21 is fitted integrally with a beehive body 23, which extends between grid portion 21 and wall 16, is made of thermoformable material, preferably so-called "Azdel®", and has a number of walls, all of the same, conveniently two-millimeter, thickness.

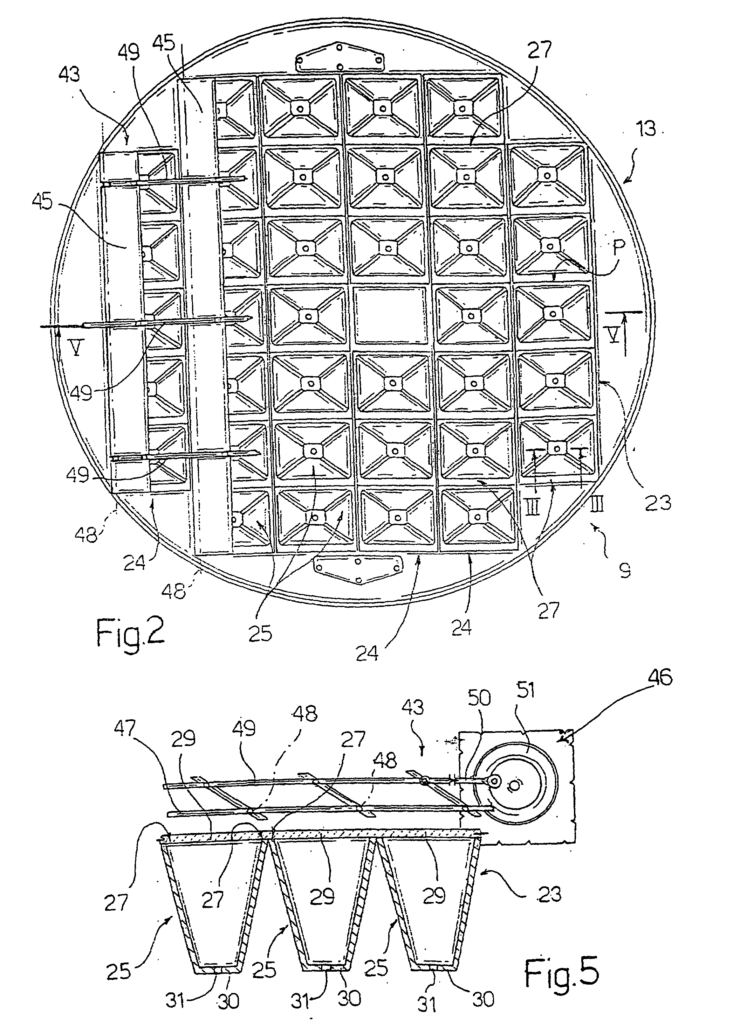

In the example shown, beehive body 23 comprises a number of parallel, side by side rows 24 of hollow, truncated-pyramid-shaped prismatic portions 25, the two lateral rows 24 having two prismatic portions 25 less than the intermediate rows 24. Prismatic portions 25 taper towards bottom wall 16 and are defined, on the side facing dome-shaped body 19, by respective flat annular surfaces 27 lying in a common plane P perpendicular to axis 10 and coincident with the Figure 2 plane. Against each surface 27 rests and is retained - preferably by means of platelike bodies (not shown) connected to beehive body 23 by screws (not shown) - the peripheral portion of a respective Fresnel lens 29 (Figure 5), which is made of acrylic material, is in the form of a rectangular plate, and is of constant, preferably about one-millimeter, thickness.

On the side facing bottom wall 16, each prismatic portion 25 terminates with a flat wall 30 having a through hole 31 extending parallel to axis 10. To each wall 30 is connected an end portion 32 of a respective optical-fiber cable 33, the opposite portion (not shown) of which is located in a region for illumination. Portion 32 is defined by a face surface 33', which faces respective lens 29 and is maintained in a common plane P1, parallel to plane P, by a connecting and adjusting device 34.

As shown in Figures 3 and 4, each device 34 comprises a respective screw 35, which has an axial hole 36 in which portion 32 of optical cable 33 is locked in known manner, and a head 37 which rests against the surface of wall 30 facing wall 16, with the interposition of a washer 38 or a Belleville washer (not shown). Screw 35 also comprises an externally threaded shank 39 loosely engaging hole 31 and projecting inside respective prismatic portion 25; and the portion of shank 39 projecting inside portion 25 is fitted with a bolt 40, which rests against wall 30 with the interposition of a washer 41 or a Belleville washer (not shown), and is tightened to allow the shank to move parallel to itself inside hole 31.

With reference to Figure 2 and particularly Figure 5, collector 9 also comprises a sunlight intercepting assembly 43 housed inside casing 14, between lenses 29 and dome-shaped body 19. For each row 24 of prismatic portions 25, and therefore for each lens 29 in the relative row, assembly 43 comprises a respective screen 45, only two of which are shown in Figure 2. Screens 45 are movable with respect to lenses 29 by means of a powered device 46 for rotating screens 45 in unison between a rest position in which screens 45 extend substantially perpendicular to plane P1 to expose the lenses completely to sunlight, and a sunlight intercepting position in which they black out half the surface of relative lenses 29. In the example shown, device 46 comprises a number of fixed rods 47 connected integrally to frame 13 and to which screens 45 are hinged to rotate about respective axes 48 parallel to one another, to rows 24 and to plane P1; and an equal number of movable rods 49 spaced apart from fixed rods 47 towards dome-shaped body 19 and hinged to screens 45. One of rods 49 is hinged to a connecting rod 50 of a known connecting rod-crank assembly powered by a rotary motor 51 controlled, like motors 7 and 12, by a known control unit 52 (Figure 1) - not described in detail - housed inside casing 14, between beehive body 23 and bottom wall 16.

In actual use, motors 7 and 12 are controlled by unit 52 so that lenses 29 are always positioned facing the sun; while motor 51 is first operated by the user to set a given light intensity, and is subsequently operated automatically by unit 52 to keep the selected light intensity value constant alongside variations in weather conditions or the interposition of bodies between the sun and collector 9. If the set lightness cannot be achieved, even with the screens in the rest position, unit 52 activates an artificial-light source (not shown), which directs a light beam on to lenses 29 to compensate for the temporary absence of sunlight.

Compared with known assemblies, assembly 1 is therefore extremely straightforward in design and, in particular, lightweight by featuring a one-piece beehive supporting body of plastic material.

Though simple in design, assembly 1 as described provides for a high degree of efficiency and long-term reliability. This is mainly due to the use of Fresnel lenses of constant thickness, to the particular arrangement of the lenses on the beehive body, and to the possibility of adjusting the position of the optical cable with respect to the respective lens to keep the cable at the same distance at all times from the respective lens and in the best position to transfer the incident sunlight.

Moreover, the intercepting screens provide for varying the amount of light directed on to the optical-fiber cables, and so setting a given lightness which is also assisted by the artificial-light source not shown.

Clearly, changes may be made to the assembly as described herein without, however, departing from the scope of the present invention. In particular, the beehive supporting body may be replaced with another of comparable lightness; and the Fresnel lenses may be made of materials other than that indicated.

Also, a different adjusting device may be used to adjust the position of each surface 33' with respect to the respective lens 29 in plane P1.

## Claims

1. A collector assembly (1) for collecting and conveying sunlight; the assembly (1) comprising a fixed supporting body (2); movable supporting means (13, 23) connected to the fixed body (2) so as to rotate, with respect to the fixed body (2), about a first (5) and a second (11) hinge axis crosswise to each other; a number of lenses (29) fitted to said movable supporting means (23); and optical-cable transfer means (33) for transferring the sunlight from said lenses (29) to regions for illumination; said lenses (29) being platelike Fresnel lenses, each of constant thickness and all lying in one common first plane (P); said transfer means comprising for each said lens (29), a respective optical-fiber cable (33) comprising a respective free face surface (33') through which the sunlight travels in use; said free face surfaces (33') lying in a common second plane (P1) facing and apart from said first plane (P);
**characterized in that** an artificial light source is provided to direct a proper light beam on to the lenses to compensate for the temporary absence of sunlight;
and **in that** the assembly also comprises, for each said lens (29), a relative screen (45) impermeable to light, and control means (50,51) to move said screens (45) between a rest position in which said screens (45) are substantially perpendicular to said first plane (P), and a work position in which the screens (45) intercept at least part of the sunlight directed to the said lens (29).

2. An assembly as claimed in Claim 1, **characterized in that** said two planes (P)(P1) are parallel.

3. An assembly as claimed in Claim 1 or 2, **characterized in that** each said lens (29) is quadrangular.

4. An assembly as claimed in Claim 3, **characterized in that** each said lens (29) is rectangular.

5. An assembly as claimed in any one of the foregoing Claims, **characterized by** comprising a number of parallel, side by side rows (24) of said lenses (29); the intermediate rows having at least one lens (29) more than the lateral rows (24).

6. An assembly as claimed in any one of the foregoing Claims, **characterized in that** each said lens (29) is made of acrylic material.

7. An assembly as claimed in any one of the foregoing Claims, **characterized by** also comprising releasable, adjustable connecting means (34) interposed between each said optical-fiber cable (33) and said supporting means (13) to adjust the position of said free face surfaces (33') with respect to said lenses (29).

8. An assembly as claimed in Claim 7, **characterized in that** said connecting means (34) comprise, for each said optical-fiber cable (33), a respective slide-type element (39) for attaching said cable (33) and connected to said supporting means (13) so as to move in a direction parallel to at least one of said planes (P)(P1); releasable locking means (37, 39, 40) being provided to lock said slide-type element (39) at any point in said direction.

9. An assembly as claimed in Claim 8, **characterized in that** said supporting means (13) comprise, for each said cable (33), a platelike connecting portion (30) parallel to said planes (P)(P1) and having a through hole (31); said slide-type element (39) loosely engaging said hole (31), and said locking means comprising a screw-nut screw assembly.

10. An assembly as claimed in any one of the foregoing Claims, **characterized in that** said movable supporting means (13, 23) comprise a one-piece body (23) made of thermoformable material and having, for each said lens (29), a respective said supporting surface (27), and a connecting portion (30) for a respective said optical-fiber cable (33).

11. An assembly as claimed in Claim 10, **characterized in that** each said supporting surface (27) and each said connecting portion (30) define a respective hollow prismatic portion (25) of said body (23) of thermoformable material; said prismatic portion (25) having a number of walls, all of a constant thickness and of the same thickness as the walls of the other prismatic portions.

## Patentansprüche

1. Kollektoranordnung (1) zum Sammeln und Transport von Sonnenlicht, wobei die Anordnung (1) aufweist einen festen Trägerkörper (2); mit dem festen Körper (2) verbundene bewegbare Trägermittel (13, 23), um bezogen auf den festen Körper (2) um eine erste (5) und eine zweite (11) kreuzweise zueinander angeordnete Drehachse zu drehen; eine Anzahl von an dem bewegbaren Trägermittel (23) festgelegten Linsen (29); und ein optisches Kabel-Übertragungsmittel (33) zum Übertragen des Sonnenlichtes von den Linsen (29) zu Bestrahlungsbereichen aufweist; wobei die Linsen (29) plattenartige Fresnel-Linsen sind, von denen jede eine konstante Dicke aufweist und alle in einer gemeinsamen ersten Ebene (P) liegen; wobei die Übertragungsmittel für jede Linse (29) ein entsprechendes optisches Fiberkabel (33) mit einer entsprechenden freien Stirnseitenoberfläche (33') aufweisen, durch welche sich das Sonnenlicht im Gebrauch fortpflanzt; wobei die freien Stirnseitenoberflächen (33') in einer gemeinsamen zweiten Ebene (P1) gegenüber und entfernt von der ersten Ebene (P) liegen, **dadurch gekennzeichnet, dass** eine künstliche Lichtquelle vorgesehen ist, um einen geeigneten Lichtstrahl auf die Linsen zu richten, um die zeitweise Abwesenheit von Sonnenlicht zu kompensieren; dass die Anordnung ferner für jede Linse (29) einen reflektiven, lichtundurchlässigen Schirm (45) aufweist, und Steuerungsmittel (50, 51), um die Schirme (45) zwischen einer Ruheposition, in der die Schirme (45) im Wesentlichen senkrecht zu der ersten Ebene (P) angeordnet sind, und einer Arbeitsposition zu bewegen, in der die Schirme (45) wenigstens einen Teil des auf die Linsen (29) gerichteten Sonnenlichts auffangen.

2. Anordnung nach Anspruch 1, **dadurch gekennzeichnet, dass** die beiden Ebenen (P) (P1) parallel sind.

3. Anordnung nach Anspruch 1 oder 2, **dadurch gekennzeichnet, dass** die Linsen (29) viereckig sind.

4. Anordnung nach Anspruch 3, **dadurch gekennzeichnet, dass** jede Linse (29) rechteckig ist.

5. Anordnung nach einem der vorhergehenden Ansprüche, **dadurch gekennzeichnet, dass** die Anordnung eine Anzahl von parallelen, Seite an Seite ausgerichteten Reihen (24) von Linsen (29) aufweist, wobei die mittleren Reihen wenigstens eine Linse (29) mehr aufweisen als die seitlichen Reihen (24).

6. Anordnung nach einem der vorhergehenden Ansprüche, **dadurch gekennzeichnet, dass** jede Linse (29) aus einem Acrylmaterial hergestellt ist.

7. Anordnung nach einem der vorhergehenden Ansprüche, **dadurch gekennzeichnet, dass** die Anordnung ferner lösbare, einstellbare Verbindungsmittel (34) aufweist, die zwischen jedes optische Fiberkabel (33) und jedes Trägermittel (13) eingesetzt sind, um die Position der freien Stirnseitenoberfläche (33') in Bezug auf die Linsen (29) einzustellen.

8. Anordnung nach Anspruch 7, **dadurch gekennzeichnet, dass** das Verbindungsmittel (34) für jedes optische Fiberkabel (33) ein entsprechendes führungsartiges Element (39).zum Anschließen des Kabels (33) aufweist, welches mit dem Trägermittel (13) verbunden ist, um sich in einer Richtung parallel zu wenigstens einer der Ebenen (P) (P1) zu bewegen, sowie lösbare Befestigungsmittel (37, 39, 40), die vorgesehen sind, um das führungsartige Element (39) an einem beliebigen Punkt in dieser Richtung festzulegen.

9. Anordnung nach Anspruch 8, **dadurch gekennzeichnet, dass** das Trägermittel (13) für jedes Kabel (33) einen plattenförmigen Anschlussabschnitt (30) parallel zu den Ebenen (P) (P1) mit einer Durchgangsöffnung (31) aufweist, wobei das führungsartige Element (39) locker mit der Öffnung (31) in Eingriff steht und das Befestigungsmittel eine Schrauben-Mutter-Schraubenanordnung aufweist.

10. Anordnung nach einem der vorhergehenden Ansprüche, **dadurch gekennzeichnet, dass** die bewegbaren Trägermittel (13, 23) einen einstückigen Körper (23) aus thermisch formbarem Material mit einer entsprechenden Trägerfläche (27) für jede Linse (29) und einen Verbindungsabschnitt (30) für ein entsprechendes optisches Fiberkabel (33) aufweisen.

11. Anordnung nach Anspruch 10, **dadurch gekennzeichnet, dass** jede Trägeroberfläche (27) und jeder Verbindungsabschnitt (30) einen entsprechenden hohlen prismaförmigen Abschnitt (25) des Körpers (23) aus thermisch formbarem Material bilden, wobei der prismaförmige Abschnitt (25) eine Anzahl von Wänden hat, die alle eine konstante Dicke und dieselbe Dicke wie die Wände der anderen prismaförmigen Abschnitte aufweisen.

## Revendications

1. Ensemble collecteur (1) pour collecter et transporter de la lumière solaire, l'ensemble (1) comprenant un corps de support fixe (2); des moyens de support mobiles (13, 23) raccordés au corps fixe (2) afin de tourner par rapport au corps fixe (2) autour d'un premier (5) et d'un deuxième (11) axe articulé en forme de croix l'un par rapport à l'autre ; un certain nombre de lentilles (29) fixées sur lesdits moyens de support mobiles (23) ; et un moyen de transfert à câble optique (33) pour transférer la lumière solaire desdites lentilles (29) vers des zones pour l'illumination ; lesdites lentilles (29) étant des lentilles Fresnel en forme de plaques d'une épaisseur constante chacune et se situant toutes dans un premier plan (P) commun ; ledit moyen de transfert comprenant pour chacune desdites lentilles (29) un câble respectif à fibres optiques (33) comprenant une surface à face libre (33') respective via laquelle la lumière solaire se déplace lors de l'utilisation ; lesdites surfaces à face libre (33') se situant dans un deuxième plan (P1) commun faisant face à et à l'écart dudit premier plan (P) ;
**caractérisé en ce qu'**une source de lumière artificielle est fournie pour diriger un faisceau lumineux adéquat sur les lentilles afin de compenser l'absence temporaire de lumière solaire ; et **en ce que** l'ensemble comprenne également, pour chacune desdites lentilles (29), des écrans relatifs (45) ne laissant pas passer la lumière et des moyens de commande (50, 51) pour faire passer lesdits écrans (45) d'une position de repos dans laquelle lesdits écrans (45) sont essentiellement perpendiculaires audit premier plan (P) et à une position de travail dans laquelle les écrans (45) interceptent au moins une partie de la lumière solaire dirigée vers ladite lentille (29).

2. Ensemble selon la revendication 1, **caractérisé en ce que** lesdits deux plans (P), (P1) sont parallèles.

3. Ensemble selon l'une quelconque des revendications 1 ou 2, **caractérisé en ce que** chacune desdites lentilles (29) est quadrangulaire.

4. Ensemble selon la revendication 3, **caractérisé en ce que** chacune desdites lentille (29) est rectangulaire.

5. Ensemble selon l'une quelconque des revendications précédentes, **caractérisé en ce qu'**il comprenne un certain nombre de rangées parallèles juxtaposées (24) desdites lentilles (29) ; les rangées intermédiaires ayant au moins une lentille (29) de plus que les rangées latérales (24).

6. Ensemble selon l'une quelconque des revendications précédentes, **caractérisé en ce que** chacune desdites lentille (29) est fabriquée en un matériau acrylique.

7. Ensemble selon l'une quelconque des revendications précédentes, **caractérisé en ce qu'**il comprenne également des moyens de raccordement (34) détachables et ajustables intercalés entre chacun desdits câbles à fibres optiques (33) et lesdits moyens de support (13), afin d'ajuster la position desdites surfaces à face libre (33') par rapport aux dites lentilles (29).

8. Ensemble selon la revendication 7, **caractérisé en ce que** lesdits moyens de raccordement (34) comprennent, pour chacun desdits câbles à fibres optiques (33), un élément respectif de type coulissant (39) pour l'attachement dudit câble (33) et qui est raccordé aux dits moyens de support (13) afin de se déplacer dans une direction parallèle à au moins l'un desdits plans (P), (P1); des moyens de fixation détachables (37, 39, 40) étant fournis pour fixer ledit élément de type coulissant (39) à n'importe quel point dans ladite direction.

9. Ensemble selon la revendication 8, **caractérisé en ce que** lesdits moyens de support (13) comprennent, pour chacun desdits câbles (33), une partie de raccordement en forme de plaque (30) parallèle auxdits plans (P), (P1) et ayant un trou de passage (31) ; ledit élément de type coulissant (39) se mettant en prise de manière lâche dans ledit trou (31), et lesdits moyens de fixation comprenant un ensemble de vis à écrou.

10. Ensemble selon l'une quelconque des revendications précédentes, **caractérisé en ce que** lesdits moyens de support mobiles (13, 23) comprennent un corps d'une seule pièce (23) fabriqué en un matériau thermoformable et ayant pour chacune desdites lentilles (29) respectivement une surface de support (27) et une partie de raccordement (30) pour un dit câble à fibres optiques (33) respectif.

11. Ensemble selon la revendication 10, **caractérisé en ce que** chacune desdites surfaces de support (27) et chacune desdites parties de raccordement (30) définissent respectivement une partie creuse en forme de prisme (25) dudit corps (23) en matériau thermoformable ; ladite partie en forme de prisme (25) ayant un certain nombre de parois ayant toutes une épaisseur constante et une même épaisseur que les parois des autres parties en forme de prisme.
